(19) Europäisches Patentamt / European Patent Office / Office européen des brevets

(11) **EP 2 867 021 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **13731332.6**

(22) Anmeldetag: **25.06.2013**

(51) Int Cl.:
*B32B 21/08* (2006.01)     *B32B 23/04* (2006.01)
*C08L 97/02* (2006.01)

(86) Internationale Anmeldenummer:
**PCT/EP2013/063197**

(87) Internationale Veröffentlichungsnummer:
**WO 2014/005877 (09.01.2014 Gazette 2014/02)**

(54) **MEHRSCHICHTIGE LEICHTE HOLZWERKSTOFFE AUS LIGNOCELLULOSEHALTIGEN WERKSTOFFEN MIT EINEM KERN UND ZWEI DECKSCHICHTEN MIT BEHANDELTEM ZELLSTOFF, BEHANDELTEN NATURFASERN, SYNTHETHISCHE FASERN ODER DEREN MISCHUNGEN IM KERN**

MULTI-LAYERED LIGHT-WEIGHT WOOD PRODUCTS CONSISTING OF MATERIALS CONTAINING LIGNOCELLULOSE WITH A CORE AND TWO COVERING LAYERS, WITH TREATED CELLULOSE MATERIAL, TREATED NATURAL FIBRES, SYNTHETIC FIBRES OR MIXTURES THEREOF IN SAID CORE

DÉRIVÉS DU BOIS MULTICOUCHES LÉGERS À BASE DE MATÉRIAUX CONTENANT DE LA LIGNOCELLULOSE COMPRENANT UN C UR ET DEUX COUCHES DE RECOUVREMENT, CONTENANT DE LA CELLULOSE TRAITÉE, DES FIBRES NATURELLES TRAITÉES, DES FIBRES SYNTHÉTIQUES OU DES MÉLANGES DE CELLES-CI DANS LE C UR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2012 EP 12174637**

(43) Veröffentlichungstag der Anmeldung:
**06.05.2015 Patentblatt 2015/19**

(73) Patentinhaber: **BASF SE**
**67056 Ludwigshafen am Rhein (DE)**

(72) Erfinder:
• **SCHADE, Matthias**
**67063 Ludwigshafen (DE)**
• **WEINKÖTZ, Stephan**
**67434 Neustadt (DE)**
• **SCHERR, Günter**
**67065 Ludwigshafen (DE)**

(74) Vertreter: **BASF IP Association**
**BASF SE**
**ZRX-C6**
**67056 Ludwigshafen (DE)**

(56) Entgegenhaltungen:
EP-A1- 2 530 215     WO-A1-2011/018373
WO-A1-2011/107900     DE-A1- 19 852 067

## Beschreibung

Die vorliegende Erfindung betrifft lignocellulosehaltige Werkstoffe mit einem Kern und zwei Deckschichten, wobei im Kern behandelte Zellstoffe, behandelte Naturfasern, synthetische Fasern oder deren Mischungen enthalten sind.

Aus WO-A-2011/018373 sind leichte und gleichzeitig druckfeste Formpressstoffe bekannt, die aus Holzspänen oder-fasern, einem Bindemittel und einem als Füllstoff dienenden porösen verschäumbaren oder teilweise verschäumbaren Kunststoff bestehen.

Die Formpressstoffe aus Holzspänen oder-fasern lassen in ihren mechanischen Eigenschaften, wie der Biegefestigkeit oder des Querzuges zu wünschen übrig.

Aus der EP-A-2 338 676 sind Leichtbauplatten, mit einer oberen und einer unteren Deckplatte aus einem Lignocellulose enthaltenden Material und einer Wabenstruktur aufweisenden, leichten Mittellage bekannt. Dabei sind die Deckplatten mit der Mittellage unter Einsatz eines Klebemittels verklebt.

Da in diesen Leichtbauplatten ausschließlich die Deckplatten Schrauben halten, weisen diese sogenannten Wabenplatten eine erhebliche Verminderung des Schraubenausziehwiderstandes auf. Weiterhin ist aufgrund der wabenartigen Struktur der Mittellage eine Bekantung nur mit Mehraufwand und Spezialmaschinen zu bewerkstelligen.

Der vorliegenden Erfindung lag daher die Aufgabe zugrunde, den zuvor genannten Nachteilen abzuhelfen.

Demgemäß wurden neue lignocellulosehaltige Werkstoffe mit einem Kern und zwei Deckschichten, die im Kern

A) 30 bis 98 Gew.-% Lignocellulosepartikel,
B) 0 bis 25 Gew.-%, bevorzugt 1 bis 25 Gew.-% expandierte Kunststoffteilchen mit der Schüttdichte im Bereich von 10 bis 150 kg/m$^3$,
C) 1 bis 50 Gew.-% eines oder mehrerer Bindemittel ausgewählt aus der Gruppe bestehend aus Aminoplastharz, Phenolformaldehydharz, und organischem Isocyanat mit mindestens zwei Isocyanatgruppen und
D) 0 bis 10 Gew.-% Additive

und in den Deckschichten

E) 70 bis 99 Gew.-% lignocellulosehaltige Partikel, Fasern oder deren Gemische,
F) 1 bis 30 Gew.-% eines oder mehrerer Bindemittel ausgewählt aus der Gruppe bestehend aus Aminoplastharz, Phenolformaldehydharz und organischem Isocyanat mit mindestens zwei Isocyanatgruppen und
G) 0 bis 10 Gew.-% Additive

enthalten, bevorzugt daraus bestehen, gefunden, welche dadurch gekennzeichnet sind, dass 2 bis 30% der Lignocellulosepartikel A) durch behandelte Zellstoffe, behandelte Naturfasern, synthetische Fasern oder deren Mischungen ersetzt sind, sowie deren Herstellung und deren Verwendung.

Die Angabe der Gew.-% der Komponenten A, B, C, D, E, F und G bezieht sich auf das Trockengewicht der jeweiligen Komponente am Gesamttrockengewicht. Die Summe der Gew.-% Angaben der Komponenten A, B, C und D beträgt 100 Gew.-%. Die Summe der Komponenten E, F und G ergibt ebenfalls 100 Gew.-%. Zusätzlich enthalten sowohl die Deckschichten als auch der Kern Wasser, das bei den Gewichtsangaben nicht berücksichtigt wird. Das Wasser kann aus der in den Lignocellulosepartikeln enthaltenen Restfeuchte, aus dem Bindemittel, aus zusätzlich zugegebenem Wasser, beispielsweise zum Verdünnen der Bindemittel oder zum Befeuchten der Deckschichten, aus den Additiven, beispielsweise wässrige Härterlösungen oder wässrige Paraffinemulsionen, oder aus den expandierten Kunststoffteilchen, wenn diese zum Beispiel mit Wasserdampf aufgeschäumt werden, stammen.

Als Zellstoffe eignen sich verpresste und getrocknete Cellulosefasern, und als Produkte beispielsweise Papier, Pappe, Kartonage oder deren Gemische, bevorzugt Papier, Pappe oder deren Gemische, besonders bevorzugt Papier.

Die Zellstoffe können in jeglicher Dimensionierung eingesetzt werden, beispielsweise als Streifen, gefaltete oder geknickte Streifen, ineinandergesteckte Streifen die ein Gitter formen, Blätter, Blätter mit Aussparungen, gefaltete oder geknickte Blätter, gefaltete oder geknickte Blätter mit Aussparungen, bevorzugt Streifen, gefaltete oder geknickte Streifen, ineinandergesteckte Streifen die ein Gitter formen , besonders bevorzugt gefaltete oder geknickte Streifen oder ineinandergesteckte Streifen die ein Gitter formen.

Als Naturfasern eignen sich Pflanzenfasern wie Samenfasern beispielsweise von Baumwolle oder Kapok, Bastfasern wie Bambusfasern, Jute, Hanffasern, Kenaf, Leinen, Hopfen, Ramie oder Blattfasern wie Abacä, Ananas, Caroä, Curauä, Henequen, Macarimba, Flachs, Sisal oder Fruchtfasern wie Kokos oder Fasern tierischen Ursprungs wie Wollen und Tierhaare oder Seiden oder deren Gemische, bevorzugt Pflanzenfasern, Bastfasern, Blattfasern oder deren Gemische, besonders bevorzugt Bastfasern, Blattfasern oder deren Gemische.

Als synthetische Fasern eignen sich Fasern aus synthetischen Polymeren wie Polykondensationsfasern, beispielsweise Polyester, Polyamid, Polyimid, Polyamidimid, Polyphenylendisulfid, Aramid oder Polyadditionsfasern, beispielsweise Polyurethan, oder andere Polymerisationsfasern, beispielsweise Polyacrylnitril, Polytetrafluorethylen, Polyethylen, Polypropylen, Polyvinylchlorid, bevorzugt Polykondesationsfasern, beispielsweise Polyester, Polyamid, Polyimid, Polyamidimid, Polyphenylendisulfid, Aramid, oder andere Polymerisationsfasern, beispielsweise Polyacrylnitril, Polytetrafluorethylen, Polyethylen, Polypropylen, Polyvinylchlorid, besonders bevorzugt Polykondensationsfasern beispielsweise Polyester, Polyamid, Polyimid, Polyamidimid, Polyphenylendisulfid, Aramid.

Die Naturfasern oder synthetischen Fasern können in jeglicher Länge und jeglichen Durchmessers oder zu Schnüren, Seilen oder Bändern versponnen/verknüpft eingesetzt werden, bevorzugt als Seile oder Bänder, besonders bevorzugt als Seile.

Die Zellstoffe, Naturfasern bzw. synthetische Fasern können mit Aminoplastharz, Phenolformaldehydharz, organischem Isocyanat mit mindestens zwei Isocyanatgruppen oder deren Gemischen in an sich bekannter Weise besprüht oder getränkt werden. Die auf die Zellstoffe, Naturfasern bzw. synthetischen Fasern aufgebrachten Mengen können in weiten Grenzen variieren und liegen in der Regel im Gewichtsverhältnis von Aminoplastharz, Phenolformaldehydharz, organischem Isocyanat mit mindestens zwei Isocyanatgruppen oder deren Gemischen zum Zellstoff bzw. zur Naturfaser von 0,5:1 bis 5:1, bevorzugt 0,75:1 bis 4:1, besonders bevorzugt 1:1 bis 3:1.

Nach dem Besprühen oder Tränken können die behandelten Zellstoffe, Naturfasern oder synthetischen Fasern getrocknet bzw. vorgehärtet werden.

In den erfindungsgemäßen lignocellulosehaltigen Werkstoffen sind in der Regel 2 bis 30 Gew.-%, bevorzugt 3 bis 20 Gew.-%, besonders 4 bis 15 Gew.-% der Lignocellulosepartikel A) durch behandelte Zellstoffe, behandelte Naturfasern, synthetische Fasern oder deren Mischungen ersetzt.

Die erfindungsgemäßen lignocellulosehaltigen Werkstoffe (Lignocellulosewerkstoffe) lassen sich wie folgt herstellen:

Die Komponenten für den Kern und die Komponenten für die Deckschichten werden in der Regel getrennt voneinander gemischt.

Für den Kern können die Lignocellulosepartikel A mit den Komponenten B, C und D bzw. den darin enthaltenen Komponentenbestandteile (= mehrere Bestandteile, z.B. Stoffe oder Verbindungen, aus der Gruppe einer Komponente) in beliebiger Reihenfolge gemischt werden. Die Komponenten A, B, C und D können jeweils aus einer, zwei (A1, A2 bzw. B1, B2, bzw. C1, C2 bzw. D1, D2) oder mehrere Komponentenbestandteilen (A1, A2, A3,..., bzw. B1, B2, B3, ... , C1, C2, C3,..., bzw. D1, D2, D3, ...) bestehen.

Bestehen die Komponenten aus mehreren Komponententbestandteilen, können diese Komponentenbestandteile entweder als Mischung oder getrennt voneinander zugegeben werden. Bei der getrennten Zugabe können diese Komponentenbestandteile direkt hintereinander oder auch zu unterschiedlichen, nicht direkt aufeinander folgenden Zeitpunkten zugegeben werden. Das bedeutet beispielsweise für den Fall, dass die Komponente C aus zwei Bestandteilen C1 und C2 besteht, dass C2 unmittelbar nach C1 zugegeben wird bzw. C1 unmittelbar nach C2, oder dass zwischen der Zugabe von C1 und C2 eine oder mehrere andere Komponenten oder Komponentenbestandteile, zum Beispiel, Komponente B , zugeben werden. Es ist auch möglich, Komponenten bzw. Komponentenbestandteile mit anderen Komponenten oder Komponentenbestandteilen vorzumischen, bevor sie zugegeben werden. Beispielsweise kann ein Additivbestandteil D1 dem Bindemittel C oder der Bindemittelbestandteil C1 zugegeben werden, bevor diese Mischung dann zur eigentlichen Mischung gegeben wird.

Bevorzugt werden zunächst die expandierten Kunststoffteilchen B zu den Lignocellulosepartikeln A gegeben und diese Mischung danach mit einem Bindemittel C oder zwei oder mehreren Bindemittelbestandteilen C1, C2, etc. versetzt. Werden zwei oder mehrere Bindemittelbestandteile eingesetzt, werden diese bevorzugt getrennt voneinander zugesetzt. Die Additive D werden bevorzugt teilweise mit dem Bindemittel C oder einem Bindemittelbestandteil (= mehrere Bestandteile, z.B. Stoffe oder Verbindungen, aus der Gruppe der Komponente) gemischt und dann zugegeben.

Für die Deckschichten werden die lignocellulosehaltigen Partikel oder Fasern E mit den Komponenten F und G bzw. den darin enthaltenen Komponentenbestandteilen (= mehrere Bestandteile, z.B. Stoffe oder Verbindungen, aus der Gruppe einer Komponente) in beliebiger Reihenfolge gemischt. Für die beiden Deckschichten können entweder die gleiche Mischung oder zwei unterschiedliche Mischungen verwendet werden, bevorzugt die gleiche Mischung.

Bestehen die Komponenten aus mehreren Komponentenbestandteilen, können diese Bestandteile entweder als Mischung oder getrennt voneinander zugegeben werden. Dabei können diese Komponentenbestandteile direkt hintereinander oder auch zu unterschiedlichen, nicht direkt aufeinander folgenden Zeitpunkten zugegeben werden. Die Additive G werden bevorzugt teilweise mit dem Bindemittel F oder einem Bindemittelbestandteil gemischt und dann zugegeben.

Die so erhaltenen Mischungen A, B, C, D und E, F, G werden übereinandergeschichtet, die Zellstoffe, Naturfasern, synthethischen Fasern oder deren Gemische in die Mittelschicht eingebracht und nach einem üblichen Verfahren zu einem lignocellulosehaltigen Formkörper bei erhöhter Temperatur verpresst.

Hierzu wird auf einem Träger zunächst die Hälfte der Mischung E, F, G gestreut. Anschließend wird ein Teil der Mischung A, B, C, D darüber geschichtet und die Zellstoffe, Naturfasern oder synthetischen Fasern leicht in diese Mischung eingedrückt. Die Zellstoffe, Naturfasern oder synthetischen Fasern werden dabei parallel zu einander in einem Abstand von 1-2 cm, sich zu einem Gitter überlagernd, spiralförmig oder ungeordnet angeordnet, bevorzugt parallel in einem Abstand von 1-2 cm oder sich zu einem Gitter überlagernd, besonders bevorzugt sich zu einem Gitter überlagernd. Nun wird die restliche A, B, C, D Mischung gefolgt von der E-, F-, G - Mischung darüber geschichtet ("Sandwich-Aufbau").

Die so erzeugte Matte wird üblicherweise bei Temperaturen von 80 bis 300°C, bevorzugt, 120 bis 280°C, besonders bevorzugt, 150 bis 250°C und bei Drücken von 1 bis 50 bar, bevorzugt 3 bis 40 bar, besonders bevorzugt 5 bis 30 bar, zu Formkörpern verpresst. In einer bevorzugten Ausführungsform wird die Matte vor diesem Heißpressen kalt vorverdichtet. Das Verpressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden Echterdingen, Seite 232 bis 254, und "MDF- Mitteldichte Faserplatten" H.-J. Deppe, K. Ernst, 1996, DRW-Verlag Weinbrenner, Leinfelden-Echterdingen, Seite 93 bis 104.) Hierbei werden diskontinuierliche Pressverfahren, beispielsweise auf Ein- oder Mehretagenpressen oder kontinuierliche Pressverfahren, beispielsweise auf Doppelbandpressen, verwendet.

Die erfindungsgemäßen Lignocellulosewerkstoffe haben in der Regel eine mittlere Dichte von 300 bis 600 kg/m$^3$, bevorzugt 350 bis 590 kg/m$^3$, besonders bevorzugt 400 bis 570 kg/m$^3$, insbesondere 450 bis 550 kg/m$^3$.

Die Lignocellulosepartikel der Komponente A liegen in den lignocellulosehaltigen Werkstoffen des Kerns in Mengen von 30 bis 98 Gew.-%, bevorzugt 50 bis 95 Gew.-%, besonders bevorzugt 70 bis 90 Gew.-% vor, deren Rohstoff jede beliebige Holzart oder deren Mischungen, beispielsweise Fichten-, Buchen-, Kiefern-, Lärchen-, Linden-, Pappeln-, Eschen-, Kastanien-, Tannenholz oder deren Mischungen, bevorzugt Fichten-, Buchenholz oder deren Mischungen, insbesondere Fichtenholz, und können beispielsweise Holzteile wie Holzlagen, Holzstreifen, Holzspäne, Holzfasern, Holzstaub oder deren Mischungen, bevorzugt Holzspäne, Holzfasern, Holzstaub und deren Mischungen, besonders bevorzugt Holzspäne, Holzfasern oder deren Mischungen - wie sie für die Herstellung von Spanplatten, MDF(Mitteldichtefaser-)- und HDF(Hochdichtefaser-)-Platten eingesetzt werden - sein kann. Die Lignocellulosepartikel können auch von holzhaltigen Pflanzen wie Flachs, Hanf, Getreide oder anderen Einjahrespflanzen stammen, bevorzugt Flachs- oder Hanfschäben oder deren Mischungen, besonders bevorzugt Flachs- oder Hanffasern oder deren Mischungen - wie sie für die Herstellung von MDF- und HDF-Platten eingesetzt werden können.

Ausgangsmaterialien für Lignocellulosepartikel sind üblicherweise Durchforstungshölzer, Industrieresthölzer und Gebrauchthölzer sowie holzfaserhaltige Pflanzen. Die Aufbereitung zu den gewünschten lignocellulosehaltigen Partikeln, beispielsweise Holzpartikeln, kann nach an sich bekannten Verfahren erfolgen (z.B. M. Dunky, P. Niemz, Holzwerkstoffe und Leime, Seite 91 bis 156, Springer Verlag Heidelberg, 2002).

Nach der Zerspanung des Holzes werden die Späne getrocknet. Danach werden gegebenenfalls Grob- und Feinanteile entfernt. Die verbleibenden Späne werden durch Sieben oder Sichten im Luftstrom sortiert. Das gröbere Material wird für die Mittelschicht (Komponente A), das feinere für die Deckschichten (Komponente E) eingesetzt.

Die lignocellulosehaltige Fasern der Komponente E liegen in den lignocellulosehaltigen Werkstoffen der Deckschicht in Mengen von 70 bis 99 Gew.-%, bevorzugt 75 bis 97 Gew.-%, besonders bevorzugt 80 bis 95 Gew.-% vor. Als Rohstoffe können Hölzer aller unter Komponente A aufgeführten Holzarten oder holzhaltige Pflanzen eingesetzt werden. Nach mechanischer Zerkleinerung können die Fasern durch Mahlprozesse, beispielsweise nach einer hydrothermischen Vorbehandlung, hergestellt werden. Verfahren zur Zerfaserung sind z.B. aus Dunky, Niemz, Holzwerkstoffe und Leime, Technologie und Einflussfaktoren, Springer, 2002, Seite 135 bis 148, bekannt.

Als expandierte Kunststoffteilchen (Komponente B) eignen sich expandierte Kunststoffteilchen, bevorzugt expandierte thermoplastische Kunststoffteilchen mit einer Schüttdichte von 10 bis 150 kg/m$^3$, bevorzugt 30 bis 130 kg/m$^3$, besonders bevorzugt 35 bis 110 kg/m$^3$, insbesondere 40 bis 100 kg/m$^3$ (ermittelt durch Wiegen eines mit dem Schüttgut gefüllten definierten Volumens).

Expandierte Kunststoffteilchen B werden in der Regel in Form von Kugeln oder Perlen mit einem mittleren Durchmesser von 0,01 bis 50 mm, bevorzugt 0,25 bis 10 mm, besonders bevorzugt 0,4 bis 8,5 mm, insbesondere 0,4 bis 7 mm eingesetzt. In einer bevorzugten Ausführungsform weisen die Kugeln eine kleine Oberfläche pro Volumen auf, beispielsweise in Form eines sphärischen oder elliptischen Partikels und sind vorteilhaft geschlossenzellig. Die Offenzelligkeit nach DIN-ISO 4590 beträgt in der Regel nicht mehr als 30%, also 0 bis 30%, bevorzugt 1 bis 25%, besonders bevorzugt 5 bis 15%.

Geeignete Polymere, die den expandierbaren oder expandierten Kunststoffteilchen zugrunde liegen, sind in der Regel alle bekannten Polymere oder deren Gemische, vorzugsweise thermoplastische Polymere oder deren Gemische, die sich verschäumen lassen. Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$-$C_{10}$-Olefinhomopolymere, $C_2$-$C_{10}$-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Des Weiteren können den Polymeren, vorzugsweise den Thermoplasten, die den expandierbaren oder expandierten Kunststoffteilchen B) zugrunde liegen übliche Additive, zum Beispiel UV-Stabilisatoren, Antioxydantien, Beschichtungsmittel, Hydrophobierungsmittel, Keimbildner, Weichmacher, Flammschutzmittel, lösliche und unlösliche anorganische und/oder organische Farbstoffe, Pigmente, und athermane Partikel, wie Ruß, Graphit oder Aluminiumpulver, gemeinsam oder räumlich getrennt als Zusatzstoffe zugegeben werden.

Die Komponente B kann üblicherweise wie folgt erhalten werden:

Geeignete Polymere können mit einem ausdehnungsfähiges Medium (auch "Treibmittel" genannt) oder enthaltend ein ausdehnungsfähiges Medium durch Einwirkung von Mikrowellen-, Wärmenergie, Heißluft, vorzugsweise Dampf, und/oder Druckänderung expandiert (oft auch als "aufgeschäumt" bezeichnet) (Kunststoff Handbuch 1996, Band 4 "Polystyrol", Hanser 1996, Seiten 640 bis 673 oder US-A-5,112,875) werden. Hierbei dehnt sich in der Regel das Treibmittel aus, die Partikel nehmen an Größe zu und Zellstrukturen entstehen. Dieses Expandieren kann in üblichen Aufschäumvorrichtungen, oft als "Vorschäumer" bezeichnet, durchgeführt werden. Derartige Vorschäumer können ortsfest installiert oder aber mobil sein. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert. Die oben genannten kompakten Kunststoffteilchen, hierin auch "expandierbare Kunststoffteilchen" genannt, enthalten, im Gegensatz zu den expandierten Kunststoffteilchen, in der Regel keine Zellstrukturen. Die expandierten Kunststoffteilchen haben in der Regel nur noch einen geringen Gehalt an Treibmittel von 0 bis 5 Gew.-%, bevorzugt 0,5 bis 4 Gew.-%, besonders bevorzugt 1 bis 3 Gew.-% bezogen auf die Gesamtmasse Kunststoff und Treibmittel. Die so erhaltenen expandierten Kunststoffteilchen können zwischengelagert werden oder ohne weitere Zwischenschritte zur Herstellung der erfindungsgemäßen Komponente B weiterverwendet werden.

Zum Expandieren der expandierbaren Kunststoffteilchen können alle dem Fachmann bekannten Treibmittel verwendet werden, beispielsweise aliphatische $C_3$- bis $C_{10}$-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe, bevorzugt n-Pentan, Isopentan, Neopentan und Cyclopentan, besonders bevorzugt ein handelsübliches Pentanisomerengemisch aus n-Pentan und iso-Pentan.
Der Gehalt an Treibmittel in den expandierbaren Kunststoffteilchen liegt im allgemeinen im Bereich von 0,01 bis 7 Gew.-%, vorzugsweise 0,01 bis 4 Gew.-%, besonders bevorzugt 0,1 bis 4 Gew.-%., jeweils bezogen auf die treibmittelhaltigen expandierbaren Kunststoffteilchen.

In einer bevorzugten Ausführungsform verwendet man Styrolhomopolymerisat (hierin auch einfach "Polystyrol" genannt), Styrolcopolymerisat oder deren Mischungen als einzigen Kunststoff in der Komponente B.

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Die Herstellung des expandierbaren Polystyrols und/oder Styrolcopolymerisats erfolgt in der Regel in an sich bekannter Weise durch Suspensionspolymerisation oder mittels Extrusionsverfahren.

Die Gesamtmenge der expandierten Kunststoffteilchen B, bezogen auf die Gesamttrockenmasse des Kerns liegt in der Regel im Bereich von 0 bis 25 Gew.-%, bevorzugt 1 bis 25 Gew.-%, besonders bevorzugt 3 bis 20 Gew.-%, insbesondere 5 bis 15 Gew.-%.

Die Gesamtmenge des Bindemittels C, bezogen auf die Gesamtmasse des Kerns liegt im Bereich von 1 bis 50 Gew.-%, vorzugsweise 2 bis 15 Gew.-%, besonders bevorzugt 3 bis 10 Gew.-%.

Die Gesamtmenge des Bindemittels F, bezogen auf die Gesamttrockenmasse der Deckschicht(en) liegt im Bereich von 1 bis 30 Gew.-%, vorzugsweise 2 bis 20 Gew.-%, besonders bevorzugt 3 bis 15 Gew.-%.

Die Bindemittel der Komponente C bzw. der Komponente F können ausgewählt werden aus der Gruppe bestehend aus Aminoplastharz, Phenolformaldehydharz und organischem Isocyanat mit mindestens zwei Isocyanatgruppen, wobei gleiche oder unterschiedliche Bindemittel bzw. Bindemittelmischungen der Komponenten C bzw. F, bevorzugt gleiche, besonders bevorzugt in beiden Fällen Aminoplast, verwendet werden. Die Gewichtsangabe bezieht sich bei Aminoplasten oder Phenolformaldehydharzen auf den Feststoffgehalt der entsprechenden Komponente (bestimmt durch Verdunsten des Wassers bei 120°C, innerhalb von 2 h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI (Polymeres Diphenylmethandiisocyanat), auf die Isocyanatkomponente an sich, also zum Beispiel ohne Lösungsmittel oder Emulgiermedium.

Als Aminoplastharz können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben. Es sind in der Regel Polykondensationsprodukte aus Verbindungen mit mindestes einer, gegebenenfalls teilweise mit organischen Resten substituierten, Aminogruppe oder Carbamidgruppe (die Carbamidgruppe wird auch Carboxamidgruppe genannt), bevorzugt Carbamidgruppe, bevorzugt Harnstoff oder Melamin, und einem Aldehyd, vorzugsweise Formaldehyd. Bevorzugte Polykondensationsprodukte sind Harnstoff-Formaldehydharze (UF-Harze), Melamin-Formaldehydharze (MF-Harze) oder melaminhaltige Harnstoff-Formaldehydharze (MUF-Harze), besonders bevorzugte Harnstoff-Formaldehydharze, beispielsweise Kaurit® Leim-Typen der Firma BASF SE.

Besonders bevorzugt sind Polykondensationsprodukte, bei denen das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,55:1, ganz besonders bevorzugt 0,3:1 bis 0,5:1 liegt. Werden die Aminoplaste in Kombination mit Isocyanaten eingesetzt, liegt das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1.

Phenolformaldehydharze (auch PF-Harze genannt) sind z.B. aus Kunststoff-Handbuch, 2. Auflage, Hanser 1988, Band 10 "Duroplaste", Seiten 12 bis 40 bekannt.

Die genannten Aminoplastharze werden üblicherweise in flüssiger Form, meist in, üblicherweise als 25 bis 90 gew.-%ige, vorzugsweise als 50 bis 70 gew.-%ige Lösung, vorzugsweise in wässriger Lösung eingesetzt, können aber auch als Feststoff eingesetzt werden.

Der Feststoffgehalt des flüssigen wässrigen Aminoplast-Harzes kann nach Günter Zeppenfeld, Dirk Grunwald, Klebstoffe in der Holz- und Möbelindustrie, 2. Auflage, DRW-Verlag, Seite 268 bestimmt werden.

Die Bestandteile des Bindemittels C und des Bindemittels F können für sich alleine eingesetzt werden, also zum Beispiel Aminoplastharz oder organisches Isocyanat oder PF-Harz als einziger Bestandteil des Bindemittels C oder des Bindemittels F. Die Harzbestandteile des Bindemittels C und des Bindemittels F können aber auch als Kombination zweier oder mehrerer Bestandteile des Bindemittels C und/oder des Bindemittels F eingesetzt werden, vorzugsweise enthalten diese Kombinationen ein Aminoplastharz und/oder Phenolformaldehydharz.

In einer bevorzugten Ausführungsform kann als Bindemittel C eine Kombination aus Aminoplast und Isocyanat eingesetzt werden. In diesem Fall liegt die Gesamtmenge des Aminoplastharzes im Bindemittel C bezogen auf die Gesamttrockenmasse des Kerns im Bereich von 1 bis 45 Gew.-%, vorzugsweise 4 bis 14 Gew.-%, besonders bevorzugt 6 bis 9 Gew.-%. Die Gesamtmenge des organischen Isocyanats, vorzugsweise des oligomeren Isocyanats mit 2 bis 10, vorzugsweise 2 bis 8 Monomereinheiten und im Mittel mindestens einer Isocyanatgruppe pro Monomereinheit, besonders bevorzugt PMDI liegt im Bindemittel C, bezogen auf die Gesamttrockenmasse des Kerns im Bereich von 0,05 bis 5 Gew.-%, vorzugsweise 0,1 bis 3,5 Gew.-%, besonders bevorzugt 0,5 bis 1,5 Gew.-%.

Die Komponenten D und G können jeweils unabhängig voneinander unterschiedliche oder gleiche, bevorzugt gleiche, dem Fachmann bekannte Härter oder deren Gemische enthalten. Diese werden üblicherweise verwendet, wenn das Bindemittel C bzw. F Aminoplaste oder Phenolformaldehydharze enthält. Bevorzugt werden diese Härter dem Bindemittel C bzw. F zugesetzt, beispielsweise im Bereich von 0,01 bis 10 Gew.-%, bevorzugt 0,05 bis 5 Gew.-%, besonders bevorzugt 0,1 bis 3 Gew.-%, bezogen auf die Gesamtmenge an Aminoplastharz oder Phenolformaldehydharz .

Unter Härter für die Aminoplastharzkomponente oder für die Phenolformaldehydharzkomponente sind hierin alle chemischen Verbindungen jeglichen Molekulargewichts zu verstehen, welche die Polykondensation von Aminoplastharz oder Phenolformaldehydharz bewirken oder beschleunigen. Eine gut geeignete Gruppe der Härter für Aminoplastharz oder Phenolformaldehydharz sind organische Säuren, anorganische Säuren, saure Salze von organischen Säuren und saure Salze von anorganischen Säuren, wie Ammoniumsalze oder saure Salze von organischen Aminen. Die Komponenten dieser Gruppe können selbstverständlich auch in Mischungen eingesetzt werden. Beispiele sind Ammoniumsulfat oder Ammoniumnitrat oder anorganische oder organische Säuren, zum Beispiel Schwefelsäure, Ameisensäure oder säureregenerierende Substanzen, wie Aluminiumchlorid, Aluminiumsulfat oder deren Gemische. Eine bevorzugte Gruppe der Härter für Aminoplastharz oder Phenolformaldehydharz sind anorganische oder organische Säuren wie Salpetersäure, Schwefelsäure, Ameisensäure, Essigsäure und Polymere mit Säuregruppen, wie Homo- oder Copolymere der Acrylsäure oder Methacrylsäure oder Maleinsäure.

Phenolformaldehydharze können auch alkalisch ausgehärtet werden. Bevorzugt werden Carbonate oder Hydroxide wie Kaliumcarbonat und Natriumhydroxid eingesetzt. Weitere Beispiele von Härtern für Aminoplastharze sind aus M. Dunky, P. Niemz, Holzwerkstoffe und Leime, Springer 2002, Seiten 265 bis 269 und weitere Beispiele von Härtern für Phenolformaldehydharze sind aus M. Dunky, P. Niemz, Holzwerkstoffe und Leime, Springer 2002, Seiten 341 bis 352 bekannt.

Die erfindungsgemäßen Lignocellulosewerkstoffen können weitere handelsübliche und dem Fachmann bekannte Additive als Komponente D bzw. Komponente G unabhängig voneinander gleiche oder verschiedene, bevorzugt gleiche Additive in Mengen von 0 bis 10 Gew.-%, bevorzugt 0,5 bis 5 Gew.-%, besonders bevorzugt 1 bis 3 Gew.-% enthalten, z.B. Hydrophobierungsmittel wie Paraffin-Emulsionen, Pilzschutzmittel, Formaldehydfänger, zum Beispiel Harnstoff oder Polyamine, und Flammschutzmittel.

Die Dicke des erfindungsgemäßen Lignocellulosewerkstoffe variiert mit dem Anwendungsgebiet und liegt in der Regel im Bereich von 0,5 bis 100 mm, vorzugsweise im Bereich von 10 bis 40 mm, insbesondere 15 bis 20 mm.

Lignocellulosewerkstoffe, zum Beispiel Holzwerkstoffe, sind eine kostengünstige und Ressourcen schonende Alternative zu Massivholz und haben große Bedeutung insbesondere im Möbelbau, bei Laminatfußboden und als Baumaterialien erlangt. Als Ausgangsstoffe dienen üblicherweise Holzpartikel unterschiedlicher Stärke, z. B. Holzspäne oder Holzfasern aus verschiedenen Hölzern. Solche Holzpartikel werden üblicherweise mit natürlichen und/oder synthetischen Bindemitteln und gegebenenfalls unter Zugabe weiterer Additive zu platten- oder strangförmigen Holzwerkstoffen verpresst.

Leichte Holzwerkstoffe aus den folgenden Gründen von großer Bedeutung:

Leichte Holzwerkstoffe führen zu einer einfacheren Handhabbarkeit der Produkte durch den Endkunden, beispielsweise beim Einpacken, Transportieren, Auspacken oder Aufbauen der Möbel. Leichte Holzwerkstoffe führen zu geringeren Transport- und Verpackungskosten, ferner können bei der Herstellung von leichten Holzwerkstoffen Materialkosten eingespart werden. Leichte Holzwerkstoffe können beispielsweise beim Einsatz in Transportmitteln zu einem geringeren Energieverbrauch dieser Transportmittel führen. Ferner können unter Verwendung von leichten Holzwerkstoffen beispielsweise materialaufwendige Dekorteile, dickere Arbeitsplatten und Wangen bei Küchen, kostengünstiger hergestellt werden.

Für viele Anwendungen, beispielsweise im Bad- oder Küchenmöbelbereich oder im Innenausbau werden leichte und wirtschaftliche lignocellulosehaltige Werkstoffe mit verbesserten mechanischen Eigenschaften, beispielsweise verbesserter Biegefestigkeiten gesucht. Außerdem sollen derartige Werkstoffe eine möglichst gute Oberflächenqualität aufweisen, um Beschichtungen, beispielsweise eine Lackierung, mit guten Eigenschaften aufbringen zu können.

Beispiele

Herstellung der Platten
Herstellung der Mischungen (A, B, C, D), (E, F, G) sowie der getränkten Zellstoffe bzw.
Naturfasern/synthetischen Fasern

Als Leime wurde Harnstoff-Formaldehydleim (Kaurit® Leim 347 der BASF SE) verwendet. Der Feststoffgehalt wurde jeweils mit Wasser auf 67 Gew.-% eingestellt. Einzelheiten sind aus der Tabelle zu entnehmen.

Herstellung einer Mischung A, B, C, D:

In einem Mischer wurden 330 g Späne (Komponente A) und 33 g expandiertes Polymer (Komponente B) gemäß Tabelle gemischt. Anschließend wurden 62,7 g einer Leimflotte aus 100 Teilen Kaurit®-Leim 347 und 4 Teilen einer 52%-igen wässrigen Ammoniumnitratlösung, 1,3 Teilen Harnstoff und 0,8 Teilen einer 60%-igen wässrigen Paraffindispersion aufgebracht.

Herstellung einer Mischung E, F, G:

Außerdem wurden in einem Mischer 179,6 g Späne oder Fasern (Komponente E) gemäß Tabelle mit 30,4 g einer Leimflotte aus 100 Teilen Kaurit®-Leim 347 und 1 Teil einer 52%-igen wässrigen Ammoniumnitratlösung, 0,5 Teilen Harnstoff, 0,5 Teilen einer 60%-igen wässrigen Paraffindispersion und 40 Teilen Wasser aufgebracht.

Herstellung der getränkten Papierstreifen:

Handelsübliches Papier (200 g/m$^2$) wurde in 1,3 x 30 cm lange Streifen geschnitten und zweimal in einem Tränkbad mit Melamin-Formaldehyd-Tränkharz, bestehend aus 100 Teilen Kauramin® Tränkharz 783, 7,1 Teilen Wasser, 0,35 Teilen Kauropal® 930 und 0,3 Teile Härter 529, getränkt, durch zwei Rakel gezogen und getrocknet.

Verpressen der beleimten Späne

Die beleimten Späne wurden in einer 30x30 cm-Form wie folgt ausgebracht: Zunächst wurde die Hälfte der Mischung (E, F, G) in die Form gestreut. Anschließend wurde 15 bis 50 % der Mischung (A, B, C, D) darüber geschichtet. In diesen Spankuchen wurden nun die verstärkenden Elemente (Papier, Schnur, Seil; siehe Tabelle) in der in der Tabelle angegebenen Geometrie gedrückt und der Rest der Mischung (A, B, C, D) darüber gestreut. Zuletzt wurde die zweite Hälfte der Mischung (E, F, G) darüber geschichtet und kalt vorverdichtet. Anschließend wurde in einer Heißpresse gepresst (Presstemperatur 210°C, Presszeit 120 s). Die Solldicke der Platte betrug jeweils 16mm.

Untersuchung des leichten holzhaltigen Stoffs

Dichte:

Die Bestimmung der Dichte erfolgte 24 Stunden nach Herstellung. Dazu wurde das Verhältnis aus Masse und Volumen eines Prüfkörpers bei demselben Feuchtegehalt bestimmt. Die quadratischen Prüfkörper wiesen eine Seitenlänge von 50 mm, bei einer Genauigkeit von 0,1 mm, auf. Die Dicke des Prüfkörpers wurde in dessen Mitte mit einer Genauigkeit von 0,05 mm gemessen. Die Waage zur Bestimmung der Prüfkörpermasse hatte eine Genauigkeit von 0,01 g. Die Rohdichte p ($kg/m^3$) eines Prüfkörpers wurde nach folgender Formel berechnet:

$$\rho = m/(b_1 * b_2 * d) * 10^6$$

Dabei ist:

m die Masse des Prüfkörpers, in Gramm, und
$b_1$, $b_2$ und d die Breite und Dicke des Prüfkörpers, in Millimeter.

Eine genaue Beschreibung der Durchführung ist z.B. DIN EN 323 zu entnehmen.

Querzugsfestigkeit:

Die Bestimmung der Querzugsfestigkeit erfolgt senkrecht zur Plattenebene. Der Prüfkörper wurde dazu mit einer gleichmäßig verteilten Zugkraft bis zum Bruch belastet. Die quadratischen Prüfkörper wiesen eine Seitenlänge von 50 mm, bei einer Genauigkeit von 1 mm, und Winkel von genau 90° auf. Weiterhin waren die Kanten sauber und gerade sein. Die Prüfkörper wurde mittels eines geeigneten Klebstoffes, beispielsweise ein Epoxydharz, mit den Jochen verklebt und mindestens 24 h im Klimaschrank bei 20°C und 65 % Luftfeuchtigkeit getrocknet. Der so vorbereitete Prüfkörper wurde nun in die Prüfmaschine auf beiden Seiten mit einem Wellengelenk selbstausrichtend eingespannt und anschließend mit konstanter Geschwindigkeit bis zum Bruch belastet und die dafür benötigte Kraft gemessen. Die Querzugfestigkeit ft ($N/mm^2$) wurde nach folgender Formel berechnet:

$$f_t = F_{max}/(a * b)$$

Dabei ist:

$F_{max}$ die Bruchkraft in Newton
a,b die Länge und Breite des Prüfkörpers in Millimeter.

Eine genaue Beschreibung der Durchführung ist z.B. DIN EN 319 zu entnehmen.

Biegefestigkeit

Die Bestimmung der Biegefestigkeit erfolgte durch Aufbringen einer Last in der Mitte eines an zwei Punkten aufliegenden Prüfkörpers. Der Prüfkörper wies eine Breite von 50 mm und eine Länge von der 20-fachen Nenndicke plus 50 mm, maximal jedoch 1050 mm und minimal 150 mm, auf. Der Prüfkörper wurde nun flach auf zwei Auflagen platziert, deren Abstand zwischen den Mitten dem Zwanzigfachen der Dicke des Prüfkörpers entsprach und anschließend in der Mitte mit einer Kraft bis zum Bruch belastet und diese Kraft gemessen. Die Biegefestigkeit $f_m$ ($N/mm^2$) wurde

nach folgender Formel berechnet:

$$f_m = (3 \cdot F_{max} \cdot l)/(2 \cdot b \cdot t^2)$$

Dabei ist:

$F_{max}$ die Bruchkraft in Newton
l der Abstand der der Mittten der Auflagen in Millimeter
b die Breite des Prüfkörpers in Millimeter
t die Dicke des Prüfkörpers in Millimeter.

Eine genaue Beschreibung der Durchführung ist der DIN EN 310 zu entnehmen.

Schraubenausziehwiderstand

Die Bestimmung des Schraubenausziehwiderstands erfolgte durch Messen der Kraft, die benötigt wird, um eine Schraube achsenparallel aus dem Prüfkörper herauszuziehen. Die quadratischen Prüfkörper wiesen eine Seitenlänge von 75 mm, bei einer Genauigkeit von 1 mm, auf. Zunächst wurden Führungslöcher, Durchmesser 2,7 mm ($\pm$ 0,1 mm), Tiefe 19 ($\pm$ 1 mm), senkrecht zur Oberfläche des Prüfkörpers in den Mittelpunkt der Oberfläche gebohrt. Anschließend wurde für die Prüfung eine Stahlschraube mit Nennmaß 4,2 mm x 38 mm, mit einem ST 4,2 Gewinde nach ISO 1478 und einer Gewindesteigung von 1,4 mm in den Prüfkörper eingebracht, so dass 15 mm ($\pm$ 0,5 mm) des vollständigen Gewindes eingebracht wurden. Der Prüfkörper wurde in einem Metallrahmen befestigt und über einen Bügel wurde auf die Unterseite des Schraubenkopfes ein Kraft angelegt und die Maximalkraft gemessen, bei der die Schraube herausgezogen wurde.
Eine genaue Beschreibung der Durchführung ist der DIN EN 320 zu entnehmen.
Die Ergebnisse der Versuche sind in der Tabelle zusammengestellt.
Die Mengenangaben beziehen sich immer auf die Trockensubstanz. Bei der Angabe der Gewichtsteile wurde das trockene Holz bzw. die Summe des trockenen Holzes und des Füllstoffs auf 100 Teile gesetzt. Bei der Angabe der Gew.-% ist die Summe aller trockenen Bestandteile des leichten holzhaltigen Stoffs gleich 100 %.
Die Versuche in der Tabelle ohne Zusatz von Komponente Verstärkungen dienen zum Vergleich und wurden nach WO-A-2011/018373 durchgeführt.

| Versuch | Angestrebte Dichte [kg/m³] | Komponente A (Holz) [g] | Komponente B (expandiertes Polymer) [g] | UF-Leim [g] | Dichte Papier [g/m²] | Geometrie Papier |
|---|---|---|---|---|---|---|
| 1 | 400 | 330 | 33 | 63 | 75 | Parallel angeordnete geknickte Streifen |
| 2 | 450 | 368 | 37 | 70 | 75 | Parallel angeordnete geknickte Streifen |
| 3 | 500 | 393 | 39 | 75 | 75 | Parallel angeordnete geknickte Streifen |
| 4 | 400 | 330 | 33 | 63 | 120 | Parallel angeordnete geknickte Streifen |
| 5 | 450 | 368 | 37 | 70 | 120 | Parallel angeordnete geknickte Streifen |
| 6 | 500 | 393 | 39 | 75 | 120 | Parallel angeordnete geknickte Streifen |
| 7 | 400 | 330 | 33 | 63 | 200 | Parallel angeordnete geknickte Streifen |
| 8 | 450 | 368 | 37 | 70 | 200 | Parallel angeordnete geknickte Streifen |
| 9 | 500 | 393 | 39 | 75 | 200 | Parallel angeordnete geknickte Streifen |
| 10 | 400 | 330 | 33 | 63 | 120 | Im Gitter angeordnet |
| 11 | 450 | 368 | 37 | 70 | 120 | Im Gitter angeordnet |
| 12 | 500 | 393 | 39 | 75 | 120 | Im Gitter angeordnet |
| 13 | 400 | 330 | 33 | 63 | 200 | Im Gitter angeordnet |
| 14 | 450 | 368 | 37 | 70 | 200 | Im Gitter angeordnet |
| 15 | 500 | 393 | 39 | 75 | 200 | Im Gitter angeordnet |
| 16 [1] | 400 | 330 | 33 | 63 | --- | --- |
| 17 [1] | 450 | 368 | 37 | 70 | --- | --- |
| 18 [1] | 500 | 393 | 39 | 75 | --- | --- |

[1] = Vergleichsversuch analog einzigem Beispiel der WO-A-2011/018373

| Versuch | Dichte [kg/m³] | Querzugsfestigkeit [N/mm²] | Biegefestigkeit [N/mm²] | Schraubenausziehwiderstand [N] |
|---|---|---|---|---|
| 1 | 428 | 0,56 | 9,83 | 335 |
| 2 | 462 | 0,67 | 13,27 | 387 |
| 3 | 502 | 0,77 | 15,22 | 523 |
| 4 | 436 | 0,60 | 10,98 | 350 |
| 5 | 486 | 0,73 | 14,85 | 410 |
| 6 | 513 | 0,83 | 17,42 | 547 |
| 7 | 456 | 0,76 | 11,67 | 371 |
| 8 | 504 | 0,81 | 14,82 | 510 |
| 9 | 530 | 0,92 | 18,21 | 632 |
| 10 | 446 | 0,64 | 11,67 | 363 |
| 11 | 491 | 0,74 | 14,46 | 481 |
| 12 | 528 | 0,82 | 17,39 | 554 |
| 13 | 474 | 0,82 | 11,88 | 495 |
| 14 | 512 | 0,91 | 15,66 | 593 |
| 15 | 543 | 0,95 | 18,52 | 578 |
| 16 [1] | 417 | 0,42 | 8,23 | 262 |
| 17 [1] | 465 | 0,42 | 11,11 | 340 |
| 18 [1] | 493 | 0,58 | 14,43 | 418 |

[1] = Vergleichsversuch analog einzigem Beispiel der WO-A-2011/018373

**Patentansprüche**

1. Lignocellulosehaltige Werkstoffe mit einem Kern und zwei Deckschichten, die im Kern

   A) 30 bis 98 Gew.-% Lignocellulosepartikel,
   B) 0 bis 25 Gew.-% expandierte Kunststoffteilchen mit der Schüttdichte im Bereich von 10 bis 150 kg/m$^3$,
   C) 1 bis 50 Gew.-% eines oder mehrerer Bindemittel ausgewählt aus der Gruppe bestehend aus Aminoplastharz, Phenolformaldehydharz, und organischem Isocyanat mit mindestens zwei Isocyanatgruppen und
   D) 0 bis 10 Gew.-% Additive

   und in den Deckschichten

   E) 70 bis 99 Gew.-% lignocellulosehaltige Partikel, Fasern oder deren Gemische,
   F) 1 bis 30 Gew.-% eines oder mehrerer Bindemittel ausgewählt aus der Gruppe bestehend aus Aminoplastharz, Phenolformaldehydharz und organischem Isocyanat mit mindestens zwei Isocyanatgruppen und
   G) 0 bis 10 Gew.-% Additive

   enthalten, indem 2 bis 30% der Lignocellulosepartikel A) durch behandelte Zellstoffe, behandelte Naturfasern, synthetische Fasern oder deren Mischungen ersetzt sind.

2. Lignocellulosehaltige Werkstoffe mit einem Kern und zwei Deckschichten nach Anspruch 1, die im Kern

   B) 1 bis 25 Gew.-% expandierte Kunststoffteilchen mit der Schüttdichte im Bereich von 10 bis 150 kg/m$^3$ enthalten.

3. Lignocellulosehaltige Werkstoffe mit einem Kern und zwei Deckschichten nach Anspruch 1 oder 2, **dadurch gekennzeichnet, dass** 3 bis 20% der Lignocellulosepartikel A) durch behandelte Zellstoffe, behandelte Naturfasern, synthetische Fasern oder deren Mischungen ersetzt sind.

4. Lignocellulosehaltige Werkstoffe mit einem Kern und zwei Deckschichten nach Anspruch 1 oder 2, **dadurch gekennzeichnet, dass** 4 bis 15% der Lignocellulosepartikel A) durch behandelte Zellstoffe, behandelte Naturfasern, synthetische Fasern oder deren Mischungen ersetzt sind.

5. Lignocellulosehaltige Werkstoffe mit einem Kern und zwei Deckschichten nach einem der Ansprüche 1 bis 4, **dadurch gekennzeichnet, dass** man als Zellstoffe verpresste und getrocknete Cellulosefasern einsetzt.

6. Lignocellulosehaltige Werkstoffe mit einem Kern und zwei Deckschichten nach einem der Ansprüche 1 bis 4, **dadurch gekennzeichnet, dass** man als Zellstoffe Papier, Pappe, Kartonage oder deren Gemische einsetzt.

7. Lignocellulosehaltige Werkstoffe mit einem Kern und zwei Deckschichten nach einem der Ansprüche 1 bis 4, **dadurch gekennzeichnet, dass** man als Zellstoffe Papier, Pappe oder deren Gemische einsetzt.

8. Lignocellulosehaltige Werkstoffe mit einem Kern und zwei Deckschichten nach einem der Ansprüche 1 bis 4, **dadurch gekennzeichnet, dass** man als Naturfasern Pflanzenfasern einsetzt.

9. Lignocellulosehaltige Werkstoffe mit einem Kern und zwei Deckschichten nach einem der Ansprüche 1 bis 4 oder 8, **dadurch gekennzeichnet, dass** man als Naturfasern Samenfasern, Bastfasern, Blattfasern, Fruchtfasern, Fasern tierischen Ursprungs oder deren Gemische einsetzt.

10. Lignocellulosehaltige Werkstoffe mit einem Kern und zwei Deckschichten nach einem der Ansprüche 1 bis 4, **dadurch gekennzeichnet, dass** man als synthetische Fasern eignen sich Fasern aus synthetischen Polymeren einsetzt.

11. Verfahren zur Herstellung von lignocellulosehaltigen Werkstoffen nach einem der Ansprüche 1 bis 10, **dadurch gekennzeichnet, dass** man die Komponenten für den Kern A bis D als Mittelschicht und die Deckschichten E bis G getrennt voneinander mischt, die erhaltenen Mischungen übereinander schichtet, die Zellstoffe, Naturfasern, synthetischen Fasern oder deren Gemische in die Mittelschicht einbringt und bei Temperaturen von 80 bis 300°C und einem Druck von 1 bis 50 bar zu Formkörpern verpresst.

**12.** Verfahren zur Herstellung von lignocellulosehaltigen Werkstoffen nach einem der Ansprüche 1 bis 10, **dadurch gekennzeichnet, dass** man die Komponenten für den Kern A bis D als Mittelschicht und die Deckschichten E bis G getrennt voneinander mischt, die erhaltenen Mischungen übereinander schichtet, die Zellstoffe, Naturfasern, synthetischen Fasern oder deren Gemische in die Mittelschicht einbringt und bei Temperaturen von 120 bis 280°C und einem Druck von 1 bis 50 bar zu Formkörpern verpresst.

**13.** Verfahren zur Herstellung von lignocellulosehaltigen Werkstoffen nach einem der Ansprüche 1 bis 10, **dadurch gekennzeichnet, dass** man die Komponenten für den Kern A bis D als Mittelschicht und die Deckschichten E bis G getrennt voneinander mischt, die erhaltenen Mischungen übereinander schichtet, die Zellstoffe, Naturfasern, synthetischen Fasern oder deren Gemische in die Mittelschicht einbringt und bei Temperaturen von 80 bis 300°C und einem Druck von 3 bis 40 bar zu Formkörpern verpresst.

**14.** Verfahren zur Herstellung von lignocellulosehaltigen Werkstoffen nach einem der Ansprüche 1 bis 10, **dadurch gekennzeichnet, dass** man die Komponenten für den Kern A bis D als Mittelschicht und die Deckschichten E bis G getrennt voneinander mischt, die erhaltenen Mischungen übereinander schichtet, die Zellstoffe, Naturfasern, synthetischen Fasern oder deren Gemische in die Mittelschicht einbringt und bei Temperaturen von 120 bis 280°C und einem Druck von 3 bis 40 bar zu Formkörpern verpresst.

**15.** Verwendung der lignocellulosehaltigen Werkstoffe nach einem der Ansprüche 1 bis 10 zur Herstellung von Gegenständen aller Art und im Baubereich.

**16.** Verwendung der lignocellulosehaltigen Werkstoffe nach einem der Ansprüche 1 bis 10 zur Herstellung von Möbeln und Möbelteilen, von Verpackungsmaterialien, im Hausbau oder im Innenausbau.

**Claims**

**1.** A lignocellulosic material having a core and two outer layers, comprising in the core

A) 30 to 98% by weight of lignocellulose particles,
B) 0 to 25% by weight of expanded plastics particles having a bulk density in the range from 10 to 150 kg/m$^3$,
C) 1 to 50% by weight of one or more binders selected from the group consisting of aminoplast resin, phenol-formaldehyde resin, and organic isocyanate having at least two isocyanate groups, and
D) 0 to 10% by weight of additives

and in the outer layers

E) 70 to 99% by weight of lignocellulosic particles, fibers or mixtures thereof,
F) 1 to 30% by weight of one or more binders selected from the group consisting of aminoplast resin, phenol-formaldehyde resin, and organic isocyanate having at least two isocyanate groups, and
G) 0 to 10% by weight of additives

in which 2% to 30% of the lignocellulose particles A) have been replaced by treated pulps, treated natural fibers, synthetic fibers or mixtures thereof.

**2.** The lignocellulosic material having a core and two outer layers according to claim 1, comprising in the core

B) 1 to 25% by weight of expanded plastics particles having a bulk density in the range from 10 to 150 kg/m$^3$.

**3.** The lignocellulosic material having a core and two outer layers according to either of claims 1 and 2, wherein 3% to 20% of the lignocellulose particles A) have been replaced by treated pulps, treated natural fibers, synthetic fibers or mixtures thereof.

**4.** The lignocellulosic material having a core and two outer layers according to either of claims 1 and 2, wherein 4% to 15% of the lignocellulose particles A) have been replaced by treated pulps, treated natural fibers, synthetic fibers or mixtures thereof.

**5.** The lignocellulosic material having a core and two outer layers according to any of claims 1 to 4, wherein said pulps comprise compressed and dried cellulose fibers.

6. The lignocellulosic material having a core and two outer layers according to any of claims 1 to 4, wherein said pulps comprise paper, paperboard, cardboard or mixtures thereof.

7. The lignocellulosic material having a core and two outer layers according to any of claims 1 to 4, wherein said pulps comprise paper, paperboard, or mixtures thereof.

8. The lignocellulosic material having a core and two outer layers according to any of claims 1 to 4, wherein said natural fibers comprise vegetable fibers.

9. The lignocellulosic material having a core and two outer layers according to any of claims 1 to 4 and 8, wherein said natural fibers comprise seed fibers, bast fibers, leaf fibers, fruit fibers, fibers of animal origin or mixtures thereof.

10. The lignocellulosic material having a core and two outer layers according to any of claims 1 to 4, wherein said synthetic fibers suitably comprise fibers of synthetic polymers.

11. A method for producing a lignocellulosic material according to any of claims 1 to 10, which comprises mixing the components for the core A to D as middle layer and the outer layers E to G separately from one another, applying the resulting mixtures in layers one above another, introducing the pulps, natural fibers, synthetic fibers or mixtures thereof into the middle layer, and compressing this system at temperatures from 80 to 300°C under a pressure of 1 to 50 bar to form moldings.

12. The method for producing a lignocellulosic material according to any of claims 1 to 10, which comprises mixing the components for the core A to D as middle layer and the outer layers E to G separately from one another, applying the resulting mixtures in layers one above another, introducing the pulps, natural fibers, synthetic fibers or mixtures thereof into the middle layer, and compressing this system at temperatures from 120 to 280°C under a pressure of 1 to 50 bar to form moldings.

13. The method for producing a lignocellulosic material according to any of claims 1 to 10, which comprises mixing the components for the core A to D as middle layer and the outer layers E to G separately from one another, applying the resulting mixtures in layers one above another, introducing the pulps, natural fibers, synthetic fibers or mixtures thereof into the middle layer, and compressing this system at temperatures from 80 to 300°C under a pressure of 3 to 40 bar to form moldings.

14. The method for producing a lignocellulosic material according to any of claims 1 to 10, which comprises mixing the components for the core A to D as middle layer and the outer layers E to G separately from one another, applying the resulting mixtures in layers one above another, introducing the pulps, natural fibers, synthetic fibers or mixtures thereof into the middle layer, and compressing this system at temperatures from 120 to 280°C under a pressure of 3 to 40 bar to form moldings.

15. Use of the lignocellulosic material according to any of claims 1 to 10 for producing articles of all kinds and in the construction sector.

16. The use of the lignocellulosic material according to any of claims 1 to 10 for producing furniture and furniture parts, packing materials, in home construction or in interior outfitting.

**Revendications**

1. Matériaux lignocellulosiques comprenant un noyau et deux couches de surface, qui contiennent dans le noyau

A) 30 à 98 % en poids de particules lignocellulosiques,
B) 0 à 25 % en poids de particules plastiques expansées d'une densité apparente dans la plage allant de 10 à 150 kg/m³,
C) 1 à 50 % en poids d'un ou de plusieurs liants choisis dans le groupe constitué par une résine aminoplaste, une résine phénol-formaldéhyde et un isocyanate organique contenant au moins deux groupes isocyanate, et
D) 0 à 10 % en poids d'additifs,

et dans les couches de surface

E) 70 à 99 % en poids de particules lignocellulosiques, de fibres ou leurs mélanges,
F) 1 à 30 % en poids d'un ou de plusieurs liants choisis dans le groupe constitué par une résine aminoplaste, une résine phénol-formaldéhyde et un isocyanate organique contenant au moins deux groupes isocyanate, et
G) 0 à 10 % en poids d'additifs,

2 à 30 % en poids des particules lignocellulosiques A) étant remplacées par des pâtes cellulosiques traitées, des fibres naturelles traitées, des fibres synthétiques ou leurs mélanges.

2. Matériaux lignocellulosiques comprenant un noyau et deux couches de surface selon la revendication 1, qui contiennent dans le noyau

B) 1 à 25 % en poids de particules plastiques expansées d'une densité apparente dans la plage allant de 10 à 150 kg/m$^3$.

3. Matériaux lignocellulosiques comprenant un noyau et deux couches de surface selon la revendication 1 ou 2, **caractérisés en ce que** 3 à 20 % en poids des particules lignocellulosiques A) sont remplacées par des pâtes cellulosiques traitées, des fibres naturelles traitées, des fibres synthétiques ou leurs mélanges.

4. Matériaux lignocellulosiques comprenant un noyau et deux couches de surface selon la revendication 1 ou 2, **caractérisés en ce que** 4 à 15 % des particules lignocellulosiques A) sont remplacées par des pâtes cellulosiques traitées, des fibres naturelles traitées, des fibres synthétiques ou leurs mélanges.

5. Matériaux lignocellulosiques comprenant un noyau et deux couches de surface selon l'une quelconque des revendications 1 à 4, **caractérisés en ce que** des fibres cellulosiques comprimées et séchées sont utilisées en tant que pâtes cellulosiques.

6. Matériaux lignocellulosiques comprenant un noyau et deux couches de surface selon l'une quelconque des revendications 1 à 4, **caractérisés en ce que** du papier, du carton, du cartonnage ou leurs mélanges sont utilisés en tant que pâtes cellulosiques.

7. Matériaux lignocellulosiques comprenant un noyau et deux couches de surface selon l'une quelconque des revendications 1 à 4, **caractérisés en ce que** du papier, du carton ou leurs mélanges sont utilisés en tant que pâtes cellulosiques.

8. Matériaux lignocellulosiques comprenant un noyau et deux couches de surface selon l'une quelconque des revendications 1 à 4, **caractérisés en ce que** des fibres végétales sont utilisées en tant que fibres naturelles.

9. Matériaux lignocellulosiques comprenant un noyau et deux couches de surface selon l'une quelconque des revendications 1 à 4 ou 8, **caractérisés en ce que** des fibres de graines, des fibres libériennes, des fibres de feuilles, des fibres de fruits, des fibres d'origine animale ou leurs mélanges sont utilisés en tant que fibres naturelles.

10. Matériaux lignocellulosiques comprenant un noyau et deux couches de surface selon l'une quelconque des revendications 1 à 4, **caractérisés en ce que** des fibres de polymères synthétiques sont utilisées en tant que fibres synthétiques.

11. Procédé de fabrication de matériaux lignocellulosiques selon l'une quelconque des revendications 1 à 10, **caractérisé en ce que** les composants pour le noyau A à D en tant que couche intermédiaire et les couches de surface E à G sont mélangés séparément les uns des autres, les mélanges obtenus sont stratifiés les uns sur les autres, les pâtes cellulosiques, les fibres naturelles, les fibres synthétiques ou leurs mélanges sont introduits dans la couche intermédiaire, et comprimés en corps moulés à des températures de 80 à 300 °C et à une pression de 1 à 50 bar.

12. Procédé de fabrication de matériaux lignocellulosiques selon l'une quelconque des revendications 1 à 10, **caractérisé en ce que** les composants pour le noyau A à D en tant que couche intermédiaire et les couches de surface E à G sont mélangés séparément les uns des autres, les mélanges obtenus sont stratifiés les uns sur les autres, les pâtes cellulosiques, les fibres naturelles, les fibres synthétiques ou leurs mélanges sont introduits dans la couche intermédiaire, et comprimés en corps moulés à des températures de 120 à 280 °C et à une pression de 1 à 50 bar.

**13.** Procédé de fabrication de matériaux lignocellulosiques selon l'une quelconque des revendications 1 à 10, **caractérisé en ce que** les composants pour le noyau A à D en tant que couche intermédiaire et les couches de surface E à G sont mélangés séparément les uns des autres, les mélanges obtenus sont stratifiés les uns sur les autres, les pâtes cellulosiques, les fibres naturelles, les fibres synthétiques ou leurs mélanges sont introduits dans la couche intermédiaire, et comprimés en corps moulés à des températures de 80 à 300 °C et à une pression de 3 à 40 bar.

**14.** Procédé de fabrication de matériaux lignocellulosiques selon l'une quelconque des revendications 1 à 10, **caractérisé en ce que** les composants pour le noyau A à D en tant que couche intermédiaire et les couches de surface E à G sont mélangés séparément les uns des autres, les mélanges obtenus sont stratifiés les uns sur les autres, les pâtes cellulosiques, les fibres naturelles, les fibres synthétiques ou leurs mélanges sont introduits dans la couche intermédiaire, et comprimés en corps moulés à des températures de 120 à 280 °C et à une pression de 3 à 40 bar.

**15.** Utilisation des matériaux lignocellulosiques selon l'une quelconque des revendications 1 à 10 pour la fabrication d'articles de tout type et dans le domaine du bâtiment.

**16.** Utilisation des matériaux lignocellulosiques selon l'une quelconque des revendications 1 à 10 pour la fabrication de meubles et de parties de meubles, de matériaux d'emballage, dans la construction de maisons ou dans la construction d'intérieur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011018373 A
- EP 2338676 A

- US 5112875 A

**In der Beschreibung aufgeführte Nicht-Patentliteratur**

- **H.-J. DEPPE ; K. ERNST.** Taschenbuch der Spanplatten Technik. DRW - Verlag Weinbrenner, 2000, 232-254
- **H.-J. DEPPE ; K. ERNST.** MDF- Mitteldichte Faserplatten. DRW-Verlag Weinbrenner, 1996, 93-104
- **M. DUNKY ; P. NIEMZ.** Holzwerkstoffe und Leime. Springer Verlag Heidelberg, 2002, 91-156
- **DUNKY ; NIEMZ ; HOLZWERKSTOFFE ; LEIME.** Technologie und Einflussfaktoren. Springer, 2002, 135-148
- Kunststoff Handbuch. Polystyrol. 1996, vol. 4, 640-673
- Ullmann's Encyclopedia. 2000

- Electronic Release oder Kunststoff-Handbuch. Polystyrol. 1996, vol. 4, 567-598
- neubearbeitete und erweiterte Auflage. Ullmanns Enzyklopädie der technischen Chemie. Verlag Chemie, 1973, vol. 4, 403-424
- Ullmann's Encyclopedia of Industrial Chemistry. VCH Verlagsgesellschaft, 1985, vol. A2, 115-141
- **M. DUNKY ; P. NIEMZ.** Holzwerkstoffe und Leime. Springer, 2002, 251-259
- Kunststoff-Handbuch. Duroplaste. 1988, vol. 10, 12-40
- **M. DUNKY ; P. NIEMZ.** Holzwerkstoffe und Leime. Springer, 2002, 265-269
- **M. DUNKY ; P. NIEMZ.** Holzwerkstoffe und Leime. Springer, 2002, 341-352